Europäisches Patentamt

European Patent Office

Office européen des brevets

(19)

(11) Veröffentlichungsnummer: **0 033 844**
**B1**

(12) # EUROPÄISCHE PATENTSCHRIFT

(45) Veröffentlichungstag der Patentschrift:
**31.07.85**

(21) Anmeldenummer: **81100156.9**

(22) Anmeldetag: **12.01.81**

(51) Int. Cl.⁴: **H 04 L 5/26,** H 04 L 27/00,
H 04 J 3/00

(54) **Verfahren zur Datenübertragung in grossen Wassertiefen.**

(30) Priorität: **11.02.80 DE 3004981**

(43) Veröffentlichungstag der Anmeldung:
**19.08.81 Patentblatt 81/33**

(45) Bekanntmachung des Hinweises auf die Patenterteilung:
**31.07.85 Patentblatt 85/31**

(84) Benannte Vertragsstaaten:
**FR GB IT NL**

(56) Entgegenhaltungen:
**AT - B - 197 904**
**DE - A - 2 748 556**
**DE - A - 2 817 338**
**DE - B - 2 339 392**
**GB - A - 1 507 609**

**Druckschrift der Fa. Sperry Publ. No. N510-2M/AA/1.76**

(73) Patentinhaber: **Licentia Patent-Verwaltungs-GmbH,
Theodor-Stern-Kai 1, D-6000 Frankfurt/Main 70 (DE)**

(72) Erfinder: **Schröder, Michael, Ing. grad., Schulweg 10,
D-2086 Ellerau (DE)**

(74) Vertreter: **Sass, Adolph, Dipl.-Ing. et al, Licentia
Patent-Verwaltungs-GmbH Theodor-Stern-Kai 1,
D-6000 Frankfurt 70 (DE)**

## Beschreibung

Die Erfindung bezieht sich auf ein Verfahren mit den im Oberbegriff des Hauptanspruches angegebenen Merkmalen.

Es ist bekannt, Wasserfahrzeuge, z. B. Bohrplattformen, mittels Ankern, Ankerseilen und Ankerwinden derart über einer Bohrstelle zu positionieren, daß trotz Einwirkens äußerer Störkräfte die Abweichungen des Wasserfahrzeuges von einer vorgegebenen Sollage zulässige Werte nicht überschreiten. Wenn die vorgegebenen Grenzwerte überschritten werden, besteht die Gefahr, daß das Bohrgestänge beschädigt wird und umfangreiche Ausbesserungsarbeiten ausgeführt werden müssen.

Es ist ebenfalls bekannt, das Standrohr (Riser) für das Bohrgestänge mit Hilfe von über seine Länge verteilten Meßgeräten, insbesondere Neigungswinkel-Meßgeräten, zu überwachen. Diese sind über Kabel an eine Zentralstation auf dem Wasserfahrzeug angeschlossen und werden zyklisch auf vorhandene Meßwerte abgefragt. Aus der Summe aller Werte kann man sich ein Bild von der Lage des Riserrohres machen, und gefährliche Zustände rechtzeitig erkennen (vergl. Druckschrift der Fa. Sperry Publ. No. N 510-2M/AA/1.76).

Weiterhin ist eine Datenübertragungseinrichtung aus der GB-A-1 507 609 bekannt, bei der eine Reihe von Unterstationen an eine gemeinsame Übertragungsleitung angeschlossen sind, an der auch eine Zentralstation liegt. Die Unterstationen werden im Zeitmultiplexverfahren zur Abgabe bestimmter Meldungen an die Zentralstation aufgefordert. Hierbei kann nicht ausgeschlossen werden, daß sich auf der Übertragungsleitung infolge der elektrischen Gegebenheiten stehende Wellen ausbilden können, durch die einzelne Unterstationen in die Knotenpunkte geraten und keinen Empfang aufweisen.

Schließlich wird in der DE-A-2 817 338 ein Übertragungssystem für Serientelegramme beschrieben, bei dem die Übertragung mit möglichst maximaler Geschwindigkeit erfolgen soll. Je nach dem Zustand der Übertragungsleitung kann es aber zweckmäßig sein, mittlere oder niedrige Geschwindigkeiten für eine fehlerfreie Übertragung zu wählen. Um die jeweils gewünschte Geschwindigkeit sicherzustellen, wird eine selbsttätige Anpassung vorgeschlagen.

Wird zur Verbindung der Unterstationen mit der Zentralstation ein verlustarmes Kabel verwendet, d. h. ein Kabel, dessen ohmscher Widerstand sehr klein gegen die Blindwiderstände ist, so sind Strom und Spannung auf dem Kabel eine Funktion des Ortes. Das bedeutet, daß Resonanzstellen vorhanden sind, an denen der Strom bzw. die Spannung klein gegenüber dem Maximalwert sind. Liegt eine Unterstation in einer solchen Resonanzstelle, so ist eine sichere Meßwertübertragung nicht gewährleistet.

Es ist daher Aufgabe der Erfindung, ein Verfahren der eingangs genannten Art zu schaffen, mit dem stets eine sichere Übertragung von Meßdaten erreicht wird.

Diese Aufgabe wird erfindungsgemäß durch die im Kennzeichen des Anspruches 1 angegebenen Merkmale gelöst. Der besondere Vorteil des Verfahrens nach der Erfindung besteht darin, daß stets auswertbare Meßwerte an die Zentralstation übertragen werden, selbst dann, wenn die Lage der Unterstation verändert wird.

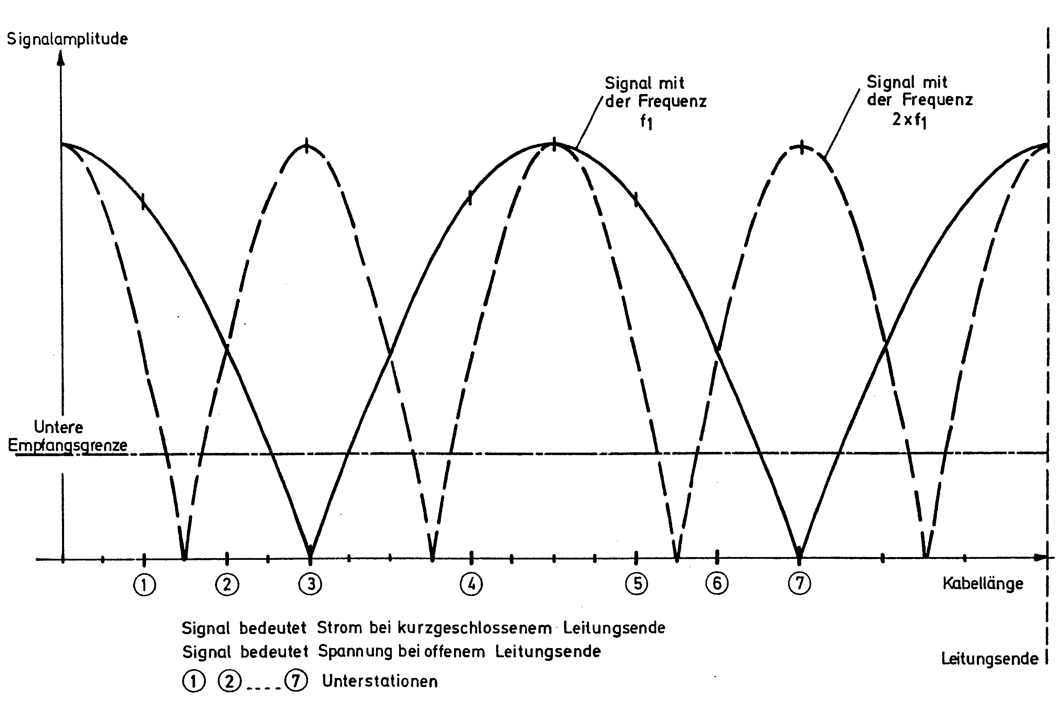

Anhand des in der Zeichnung dargestellten Schaubildes sollen nähere Erläuterungen gegeben werden.

Im Schaubild ist über die Kabellänge die Signalamplitude aufgetragen. An das ein- oder zweiadrige Kabel sind die Zentralstation und in unregelmäßigen Abständen die Unterstationen 1 bis 7 angeschlossen. Mit der Trägerfrequenz $f_1$ werden Signale von der Zentralstation an die Unterstationen gesendet. Um die Übertragungsverluste so klein wie möglich zu halten, wird ein verlustarmes Kabel verwendet, dessen ohmscher Widerstand klein gegen die Blindwiderstände ist. Hierfür gilt

$$Z_0 \; = \; \sqrt{L'/C'},$$

worin

$Z_0$ — Wellenwiderstand,
$L'$ — der Induktivitätsbelag,
$C'$ — der Kapazitätsbelag sind.

Aus der Zeichnung ist zu ersehen, daß bei einer Datenübertragung von der Zentralstation mit der Trägerfrequenz $f_1$ sich eine stehende Welle über die Länge des Kabels ausbildet, die an den Orten der Unterstationen 3 und 7 Spannungsknoten aufweisen. Alle anderen Unterstationen liegen dagegen an Orten, an denen die Spannung deutlich über dem unteren Grenzwert (strichpunktierte Linie) liegt. Für diese Unterstationen kann der Datenverkehr mit der Trägerfrequenz $f_1$ fortgesetzt werden.

Für die Unterstationen 3 und 7, die keine Signale von der Zentralstation empfangen und ihre Meßdaten nicht an die Zentralstation absetzen können, ist es erforderlich, eine Frequenzumschaltung vorzunehmen. In der Zentralstation wird daher eine Umschaltung auf die doppelte Trägerfrequenz $2 \times f_1$ vorgenommen. Diese Spannungskurve ist gestrichelt in das Schaubild eingezeichnet worden. In den Unterstationen 3 und 7 wird über Steuersignale von der Zentralstation eine Umschaltung auf die doppelte Trägerfrequenz $2 \times f_2$ veranlaßt, so daß diese Unterstationen in der Zentralstation auswertbare Signale absetzen können. Aus der Zeichnung geht hervor, daß jetzt die Unterstation 3 einen maximalen Empfang aufweist und die Unterstation 7 mit einem Spannungswert empfängt und sendet, der ebenfalls über dem Grenzwert liegt. Der Sender in der Zentralstation und die Unterstationen sind auf die Trägerfrequenzen $f_1$ und $2 \times f_1$ abgestimmt, während die Sender in den Unterstationen und die Zentralstation auf die Frequenzen $f_2$ und $2 \times f_2$ abgestimmt sind.

Es ist nicht auszuschließen, daß die Lage der Unterstation am Riserrohr verändert werden muß und sich damit die Kabellänge zur Zentralstation ändert. Auch in diesem Falle wird, wie aus der Zeichnung ersichtlich, durch Umschaltung auf die doppelte Trägerfrequenz gewährleistet, daß sowohl in der Zentralstation als auch in den Unterstationen stets verwertbare Signale empfangen werden.

### Patentansprüche

1. Verfahren zur Datenübertragung von einer Zentralstation zu mehreren Unterstationen und von den Unterstationen zu der Zentralstation mittels Trägerfrequenz im Zeitmultiplexbetrieb, wobei die Unterstationen in beliebigen Abständen an einem gemeinsamen verlustarmen Ein- oder Zweiaderkabel angeschlossen sind, das nicht mit dem Wellenwiderstand abgeschlossen ist und dessen Länge groß gegenüber der Wellenlänge der Trägerfrequenz ist, insbesondere zum Einsatz in großen Wassertiefen, dadurch gekennzeichnet, daß sowohl die Zentralstation als auch die Unterstation wahlweise für den Empfang und die Sendung von zwei Trägerfrequenzen ($f_1$, $f_2$) eingerichtet sind, wobei die zweite Trägerfrequenz den doppelten Wert der Trägerfrequenz ($2 \times f_1$, $2 \times f_2$) besitzt und immer dann verwendet wird, wenn die Empfangs- und Sendebedingungen am Ort der Unterstation Grenzwerte unterschreiten.

2. Verfahren nach Anspruch 1, dadurch gekennzeichnet, daß von der Zentralstation aufgrund von Messungen die Entscheidung bezüglich der Arbeitsfrequenz getroffen und der jeweiligen Unterstation mitgeteilt wird.

### Claims

1. Method for the transmission of data from a central station to several substations and from the substations to the central station by means of carrier frequency in time multiplex operation, wherein the substations are connected at desired spacings to a common low-loss single-core or twin-core cable, which is not terminated by the characteristic impedance and the length of which is great compared with the wavelength of the carrier frequency, particularly for the use in great depths of water, characterised thereby, that the central station as well as also the substation are equipped selectably for the reception and the transmission of two carrier frequencies ($f_1$, $f_2$), wherein the second carrier frequency has twice the value of the carrier frequency ($2 \cdot f_1$, $2 \cdot f_2$) and is always used when the conditions for reception and transmission fall below limit values at the location of the substation.

2. Method according to claim 1, characterised thereby, that the decision in respect of the operating frequency is taken by the central station on the basis of measurements and communicated to the respective substation.

### Revendications

1. Procédé pour transmettre des données d'une station centrale à plusieurs sous-stations et des sous-stations à la station centrale, par fréquence porteuse selon un processus de multiplexage dans le temps, les sous-stations étant raccordées à des distances quelconques à un câble commun à un ou deux conducteurs et à faible perte, qui est sans couplage avec terminaison adaptée et dont la longeur est grande comparativement à la longueur d'onde de la fréquence porteuse, en particulier pour application dans des grandes profondeurs d'eau, caractérisé en ce que la station centrale et les sous-stations sont agencées pour la réception et l'émission sélectives de deux fréquences porteuses ($f_1$, $f_2$) et une deuxième fréquence porteuse ($2 \times f_1$, $2 \times f_2$) de valeur double de la fréquence porteuse étant utilisée chaque fois que les conditions de réception et d'émission à l'emplacement de la sous-station descendent au-dessous de valeurs limites.

2. Procédé selon la revendication 1, caractérisé en ce que, sur la base de mesures, la station centrale décide de la fréquence de travail et en informe la sous-station concernée.

Signalamplitude

Signal mit
der Frequenz
f₁

Signal mit
der Frequenz
2 x f₁

Untere
Empfangsgrenze

Kabellänge

① ② ③ ④ ⑤ ⑥ ⑦

Signal bedeutet Strom bei kurzgeschlossenem Leitungsende
Signal bedeutet Spannung bei offenem Leitungsende
① ② .... ⑦ Unterstationen

0 033 844

Leitungsende